**Europäisches Patentamt**

**European Patent Office**

**Office européen des brevets**

(19)

(11) Veröffentlichungsnummer: **0 267 475**
**B1**

(12)  ## EUROPÄISCHE PATENTSCHRIFT

(45) Veröffentlichungstag der Patentschrift:
21.02.90

(21) Anmeldenummer: 87115611.3

(22) Anmeldetag: 23.10.87

(51) Int. Cl.⁴: **G01H 11/08**, G01H 3/00

(54) Ultraschall-Sensor.

(30) Priorität: 04.11.86 DE 3637494

(43) Veröffentlichungstag der Anmeldung:
18.05.88 Patentblatt 88/20

(45) Bekanntmachung des Hinweises auf die Patenterteilung:
21.02.90 Patentblatt 90/8

(84) Benannte Vertragsstaaten:
DE FR GB NL

(56) Entgegenhaltungen:
EP-A- 0 086 531
DE-C- 894 774
US-A- 3 970 862
US-A- 4 433 400

IEEE TRANSACTIONS ON SONICS AND ULTRASONICS,
Band SU-30, Nr. 5, September 1983, Seiten 295-303,
IEEE, New York, US; G.R. HARRIS et al.: "An analysis of
pulsed ultrasonic fields as measured by PVDF
spot-poled membrane hydrophones"

(73) Patentinhaber: Siemens Aktiengesellschaft,
Wittelsbacherplatz 2, D-8000 München 2(DE)

(72) Erfinder: Granz, Bernd, Dr., Leonhardstrasse 6,
D-8507 Oberasbach(DE)
Erfinder: Naser, Georg, Dipl.-Ing. (FH), Karlstrasse 10,
D-8502 Zirndorf(DE)
Erfinder: Reichenberger, Helmut, Dr.,
Begonienstrasse 28, D-8501 Eckental(DE)

## Beschreibung

Die Erfindung betrifft einen Ultraschall-Sensor mit einer wenigstens in ihrem Randbereich an einem Stützkörper befestigten Polymerfolie, die wenigstens in einem Teilbereich piezoelektrisch aktiviert ist, der mit Elektroden elektrisch gekoppelt ist.

Stoßwellen im Ultraschallbereich sind kurze Impulse mit Anteilen hoher Frequenzen von mehr als 1 MHz und oft sehr hohem Druck von über 1 kbar. Diese Stoßwellen werden z.B. bei der Lithotripsie zum Zerstören von Konkrementen, beispielsweise von Nierensteinen, verwendet, wie in der DE-OS 33 28 051 näher beschrieben ist. Insbesondere bei einer solchen medizinischen Anwendung ist es notwendig, die Stoßwellen genau zu messen, den Fokus genau zu definieren und den Betrieb des Lithotriptors zu überwachen. Dazu muß ein Sensor bereitgestellt werden, der mit genügend hoher Bandbreite den Zeitverlauf der jeweiligen Stoßwelle darstellen kann. Weiterhin muß der Sensor in der Lage sein, den Stoßwellenverlauf auch am Ort des höchsten Druckes, also im Fokus, wo das zu zerstörende Konkrement plaziert wird, genau und reproduzierbar zu messen, ohne selbst zerstört zu werden. Mit anderen Worten, es müssen relativ hohe Drücke, die bis über 1 kbar gehen können, zuverlässig gemessen werden können, und der Sensor muß von robuster Bauart sein.

An Orten niederen Druckes wurden bisher als Ultraschall-Sensoren Membranhydrophone in verschiedener Bauart (P.A. Lewin, Ultrasonics, Sept. 1981, 213-216; R.C. Preston et al., J. Phys. E.: Sci. Instrum., Vol. 16 (1983), 786-796) verwendet. In allen Fällen enthält der Sensor als Meßfolie das piezoelektrische Polymer Polyvinylidenfluorid (PVDF), auf das eine Metallisierung aufgebracht wurde.

Mit PVDF läßt sich eine hohe Bandbreite von z.B. 10 MHz realisieren. Es hat sich aber gezeigt, daß alle Sensortypen der genannten Ausführungsformen für den Nachweis von Stoßwellen im Fokus einer Stoßwellenquelle nicht geeignet sind. Sie halten nämlich dem hohen Druck, dessen Amplitude im Bereich von etwa 1 kbar ($10^8$ Pa) liegen kann, bei gleichzeitiger steiler Anstiegsflanke der Stoßwelle, wobei die Anstiegszeit 1 μsec unterschreiten kann, im Fokus nicht stand. Sie sind nach wenigen Stoßwellenimpulsen unbrauchbar. Insbesondere die elektrischen Kontakte in der Nähe der sensitiven Stelle des Sensors, d.h. nahe des aktivierten Bereiches der Polymerfolie, werden beim Nachweis von Stoßwellen zerstört.

In der europäischen Patentanmeldung mit der Veröffentlichungsnummer 0 227 985 ist ein Sensor der eingangs genannten Art vorgeschlagen, der Stoßwellen auch im Fokus eines Lithotriptors zeitlich stabil nachweisen kann. Bei diesem Sensor befinden sich die metallischen elektrischen Kontakte räumlich getrennt von der piezoelektrisch aktiven Zone der PVDF-Membran oder -Folie. Diese Anordnung kann zu einer relativ geringen Empfindlichkeit führen.

Aufgabe der Erfindung ist es, einen Ultraschall-Sensor der eingangs genannten Art mit piezoelektrisch aktivierter Polymerfolie anzugeben, der insbesondere zur Messung von energiereichen Stoßwellen bei ausreichender Empfindlichkeit verwendet werden kann und der von hoher Lebensdauer ist.

Diese Aufgabe wird erfindungsgemäß dadurch gelöst, daß eine erste Elektrode am aktivierten Teilbereich der Polymerfolie anliegt und eine zweite Elektrode räumlich getrennt vom piezoelektrisch aktivierten Teilbereich angeordnet ist.

Beim Auftreten eines Stoßwellenimpulses entstehen im piezoelektrisch aktivierten Teilbereich der Polymerfolie Ladungen. Die erste Elektrode berührt lose den piezoelektrisch aktivierten Teilbereich beispielsweise auf der Rückseite der Polymerfolie, die insbesondere aus PVDF besteht, und ist an den ersten Eingang eines Vorverstärkers angeschlossen. Die zweite Elektrode ist beispielsweise als Gitter ausgeführt und auf Masse gelegt. Der zweite Eingang des Vorverstärkers ist ebenfalls mit Masse verbunden. Auf diese Weise wird das (Ladungs-)Signal von der piezoaktiven Stelle der Polymerfolie galvanisch abgegriffen und verstärkt. Bedingt durch die genannte konstruktive Ausgestaltung wird eine ausreichend gute Empfindlichkeit und lange Lebensdauer des Meßsensors, insbesondere auch für hohe Drücke, erzielt.

Weitere Vorteile und Ausgestaltungen der Erfindung ergeben sich aus den abhängigen Ansprüchen sowie aus der Beschreibung eines Ausführungsbeispiels anhand der FIG.

Die FIG zeigt einen Ultraschall-Stoßwellensensor mit Polymerfolie sowie erster und zweiter Elektrode in einem Schnittbild.

Nach der FIG enthält der Ultraschall-Sensor 2 für den Nachweis von Stoßwellen eine dünne, insbesondere kreisscheibenförmige Polymerfolie oder Polymermembran 4, die im Innern eines ringförmigen Stützkörpers, hier zwischen zwei Spannringen 6a, 6b, straff eingespannt ist. Die Spannringe 6a, 6b sind Teil eines zylindrischen, aus Isolierstoff gefertigten Gehäuses vom Innendurchmesser D. Auf den inneren Stirnseiten der Spannringe 6a, 6b liegt die Polymerfolie 4 also randseitig fest auf. Die Polymerfolie 4 besteht vorzugsweise aus Polyvinylidenfluorid (PVDF). Die Polymerfolie 4 ist in ihrem zentralen Teilbereich 42 polarisiert und damit nur dort piezoelektrisch aktiviert. Der piezoelektrisch aktivierte Teilbereich 42 ist von einem ringförmigen Bereich 44 umgeben, der piezoelektrisch inaktiv ist. Die Polymerfolie 4 selbst ist mit keinerlei metallischen Kontakten versehen. Der Teilbereich 42 ist rotationssymmetrisch bezüglich einer senkrecht zu den Flachseiten der Polymerfolie 4 verlaufenden Mittelachse 22 angeordnet. Er wird bei der bevorzugten Anwendung im Fokus der (nicht gezeigten) Stoßwellenquelle eines Lithotriptors plaziert. Die linke Stirnseite des Gehäuses ist dabei der Stoßwellenimpulse p aussendenden Stoßwellenquelle zugewandt.

Der Durchmesser d des kreisscheibenförmigen zentralen Teilbereiches 42 ist sehr viel kleiner als der freie Durchmesser D der Polymerfolie 4. Die Dicke Z der Polymerfolie 4 liegt zwischen 10 und 100 μm, insbesondere zwischen 25 μm und 50 μm. Vorliegend hat sie z.B. eine Dicke Z = 25 μm. Der

Durchmesser d kann z.B. 1 bis 2 mm und der Durchmesser D z.B. 50 oder 100 mm betragen. Der Durchmesser d bestimmt die Ortsauflösung, mit der gemessen wird.

In Richtung einer Stoßwelle p gesehen auf der Rückseite des zentralen Teilbereiches 42 ist eine erste Elektrode 200 in Form eines Stiftes oder Nagels auf einer dünnen Brücke oder auf einem Steg 202 aus Kunststoff, z.B. Plexiglas, angeordnet. Die dünne ultraschalldurchlässige Brücke 202 dient somit als Halteelement für den abgewinkelten oder abgeknickten metallischen Kontakt-Stift, d.h. für die Elektrode 200. Die Brücke 202 ist in dem rechten Spannring 6b befestigt.

Der Stift 200 weist eine leicht ballige oder leicht abgerundete und gegenüber dem Rückteil 203 verbreiterte Kopfseite 204 auf, deren Fläche ungefähr gleich groß ist wie die Fläche des aktivierten Teilbereiches 42. Der rechtwinklig abgeknickte Rückteil 203 des Stiftes 200 ist durch den Spannring 6b an geeigneter Stelle radial hindurchgeführt. Der Stift 200 ist so justiert, daß die Kopfseite 204 dem zentralen Teilbereich 42 direkt gegenüberliegt und diesen unter leichter mechanischer Vorspannung, d.h. federnd, berührt. Die Vorspannung kann insbesondere durch die gewählte Art der Befestigung am Stützkörper 6b bewirkt werden. Die Größe der Vorspannung ist vom Ort der Durchführung durch den Ring 6b, der Länge des Rückteils 203 und dessen Material abhängig. Insbesondere kann auch eine (nicht gezeigte) Einstellbarkeit des Auflagedruckes der Kopfseite 204 auf der Fläche 42 durch mechanische Mittel, wie z.B. Schraubverschiebungen, vorgesehen sein.

Der Stift 200 ist mit einer elektrischen Leitung 206 versehen, die zum ersten Eingang 208 eines Vorverstärkers 210 führt. Der zweite Eingang 212 des Vorverstärkers 210 ist auf Masse gelegt.

Beim Auftreffen eines Stoßwellenimpulses p entstehen im piezoelektrisch aktivierten Teilbereich 42 elektrische Ladungen. Diese werden als Signal von dem Teilbereich 42 über die Elektrode 200 und die Leitung 206 "ausgelesen" und im Vorverstärker 210 verstärkt.

Auf der Vorderseite der Polymerfolie 4 ist eine räumlich vom aktivierten Teilbereich 42 getrennte zweite Elektrode 8 angebracht. Diese kann in verschiedenen Ausführungsformen ausgebildet sein. Im dargestellten Beispiel besteht die zweite Elektrode 8 aus einem an Masse gelegten Metallgitter 214 und einem dünnen, an Masse gelegten metallischen Ring 216. Das Massegitter 214 ist mit dem Massering 216 elektrisch leitend verbunden. Das Gitter 214 ist für Ultraschall und damit Stoßwellen durchlässig. Der zentral zur Achse 22 angeordnete Metallring 216 hat etwa den Durchmesser D. Er faßt somit den Teilbereich 42 ein.

Die Stützringe 6a, 6b sind an ihren von der Polymerfolie 4 abgewandten Flachseiten jeweils mit einer Deckplatte 122 bzw. 124 aus gut ultraschalldurchlässigem Material versehen. Zwischen der Polymerfolie 4 und den Deckplatten 122 und 124 ist somit jeweils eine flüssigkeitsdichte Kammer 100a bzw. 100b gebildet, die mit einem flüssigen Dielektrikum, wie z.B. Wasser, gefüllt sind und die zwecks Druckausgleichs miteinander über Aussparungen, kleine Löcher oder Kanäle 218 in der Zwischenwand (Polymerfolie 4) in Verbindung stehen. In einer vorteilhaften Ausführungsform bestehen die Deckplatten 122 und 124 aus einem Kunststoff und speziell einem Polymer. Das Dielektrikum ist bevorzugt flüssig; es hat nahezu die gleiche akustische Impedanz wie das schalltragende Medium, das den Stoßwellenimpuls p an den Ultraschall-Sensor 2 heranführt. Dieser Impuls wird als elektrisches Signal am Ausgang 230 des Vorverstärkers 210 abgegriffen.

Vorteil des Ultraschall-Sensors 2 ist der galvanische Signal-Abgriff am piezoelektrisch aktivierten Teilbereich 42. Dadurch wird die Empfindlichkeit des Ultraschall-Sensors 2 im Vergleich zu einem kapazitiven Abgriff wesentlich erhöht.

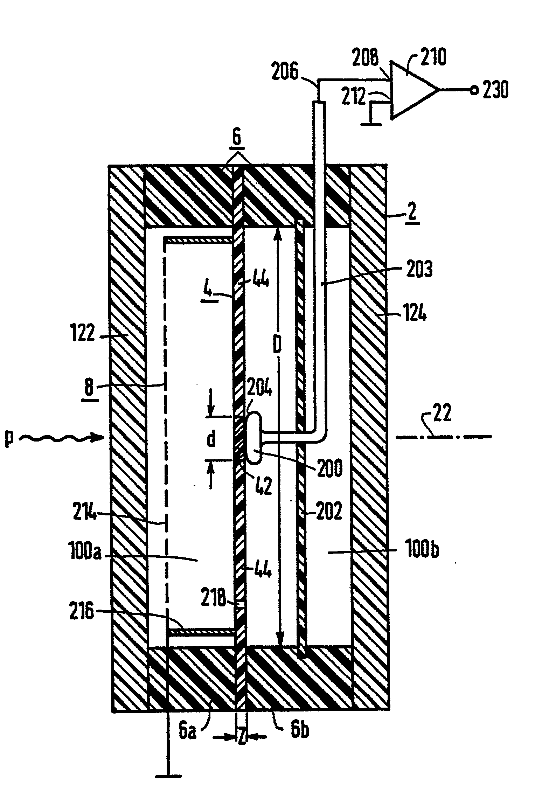

**Patentansprüche**

1. Ultraschall-Sensor mit einer wenigstens in ihrem Randbereich an einem Stützkörper (6) befestigten Polymerfolie (4), die wenigstens in einem Teilbereich (42) piezoelektrisch aktiviert ist, der mit Elektroden (8, 200) elektrisch gekoppelt ist, **dadurch gekennzeichnet,** daß eine erste Elektrode (200) am aktivierten Teilbereich (42) der Polymerfolie (4) anliegt und eine zweite Elektrode (8) räumlich getrennt vom piezoelektrisch aktivierten Teilbereich (42) angeordnet ist.

2. Ultraschall-Sonde nach Anspruch 1, **dadurch gekennzeichnet,** daß die erste Elektrode (200) als Stift ausgebildet ist, und daß die Polymerfolie (4) an dessen abgerundeter Kopfseite (204) unter leichter Vorspannung anliegt.

3. Ultraschall-Sonde nach Anspruch 1 oder Anspruch 2, **dadurch gekennzeichnet,** daß die erste und zweite Elektrode (200, 8) an einen Verstärker (210) angeschlossen sind.

4. Ultraschallsonde nach einem der Ansprüche 2 oder 3, **dadurch gekennzeichnet,** daß die Größe des aktivierten Teilbereichs (42) gleich der Fläche des Kopfteils (204) des Stifts ist, der den Teilbereich (42) berührt.

5. Ultraschall-Sonde nach einem der Ansprüche 1 bis 4, **dadurch gekennzeichnet,** daß der aktivierte Teilbereich (42) im zentralen Teil der Polymerfolie (4) angeordnet ist, daß die Polymerfolie (4) randseitig durch ein Gehäuse (6) eingespannt ist, daß die erste Elektrode (200) an der Rückseite der Polymerfolie (4) anliegt, daß diese Elektrode (200) als abgeknickter Kontaktstift ausgeführt ist, und daß der Kontaktstift durch seine Befestigung am Gehäuse (6) federnd an dem aktivierten Teilbereich (42) auf der Rückseite der Polymerfolie (4) anliegt.

6. Ultraschall-Sonde nach einem der Ansprüche 1 bis 5, **dadurch gekennzeichnet,** daß die Polymerfolie (4) mit mindestens einer Öffnung (218) zum Druckausgleich versehen ist.

7. Ultraschall-Sonde nach einem der Ansprüche 1 bis 6, **dadurch gekennzeichnet,** daß zwei Kammern (100a, 100b) vorgesehen sind, die durch die Polymerfolie (4) voneinander getrennt sind.

8. Ultraschall-Sonde nach Anspruch 7, **dadurch gekennzeichnet,** daß jede Kammer (100a, 100b) einen Spannring (6a, 6b) umfaßt.

9. Ultraschall-Sonde nach einem der Ansprüche 1 bis 8, **dadurch gekennzeichnet,** daß die zweite Elektrode (8) ein im Abstand von der Polymerfolie (4) angeordnetes Metallgitter (214) umfaßt.

10. Ultraschall-Sonde nach Anspruch 9, **dadurch gekennzeichnet,** daß das Metallgitter (214) mit einem Metallring (216) elektrisch leitend verbunden ist, der den aktivierten Teilbereich (42) einfaßt.

## Claims

1. Ultrasonic sensor with a polymer film (4) secured, at least in its edge region, on a supporting body (6), the film being activated in a piezoelectric manner at least in a subsection (42) electrically coupled with the electrodes (8, 200), characterised in that a first electrode (200) abuts the activated subsection (42) of the polymer film (4) and a second electrode (8) is arranged so that it is spatially separated from the piezoelectrically activated subsection (42).

2. Ultrasonic probe according to claim 1, characterised in that the first electrode (200) is constructed as a pin, and in that the polymer film (4) abuts under slight prestress its rounded-off head side (204).

3. Ultrasonic probe according to claim 1 or claim 2, characterised in that the first and second electrode (200, 8) are connected to an amplifier (210).

4. Ultrasonic probe according to one of claims 2 or 3, characterised in that the size of the activated subsection (42) is equal to the area of the head part (204) of the pin which touches the subsection (42).

5. Ultrasonic probe according to one of claims 1 to 4, characterised in that the activated subsection (42) is arranged in the central part of the polymer film (4) and in that the polymer film (4) is fixed on the edge side by a housing (6), in that the first electrode (200) abuts the rear side of the polymer film (4), in that this electrode (200) is constructed as a bent contact pin and in that the contact pin, through its fastening on the housing (6), abuts, in an elastic manner, the activated subsection (42) on the rear side of polymer film (4).

6. Ultrasonic probe according to one of claims 1 to 5, characterised in that the polymer film (4) is provided with at least one opening (218) for pressure compensation.

7. Ultrasonic probe according to one of claims 1 to 6, characterised in that two chambers (100a, 100b) are provided which are separated from each other by the polymer film (4).

8. Ultrasonic probe according to claim 7, characterised in that each chamber (100a, 100b) includes a clamp ring (6a, 6b).

9. Ultrasonic probe according to one of claims 1 to 8, characterised in that the second electrode (8) includes a metal grid (214) arranged spaced from the polymer film (4).

10. Ultrasonic probe according to claim 9, characterised in that the metal grid (214) is connected to a metal ring (216) in an electrically conducting manner, which ring encloses the activated subsection (42).

## Revendications

1. Capteur à ultrasons comportant une feuille de polymère (4), qui est fixée au moins au niveau de sa zone marginale à un corps de support (6) et est activée de façon piézoélectrique au moins dans une zone partielle (42), qui est couplée électriquement à des électrodes (8, 200), caractérisé par le fait qu'une première électrode (200) s'applique sur la zone partielle activée (42) de la feuille de polymère (4) et qu'une seconde électrode (8) est disposée en étant séparée dans l'espace par rapport à la zone partielle (42) activée par voie piézoélectrique.

2. Sonde à ultrasons suivant la revendication 1, caractérisé par le fait que la première électrode (200) est réalisée sous la forme d'une tige et que la feuille de polymère (4) s'applique, sous une légère précontrainte, contre la partie de tête arrondie (204) de la tige.

3. Sonde à ultrasons suivant la revendication 1 ou 2, caractérisée par le fait que les première et seconde électrodes (200, 8) sont raccordées à un amplificateur (210).

4. Sonde à ultrasons suivant l'une des revendications 2 ou 3, caractérisée par le fait que l'étendue de la zone partielle activée (42) est égale à la surface de la partie de tête (204) de la tige, qui est en contact avec la zone partielle (42).

5. Sonde à ultrasons suivant l'une des revendications 1 à 4, caractérisée par le fait que la zone partielle activée (42) est située dans la partie centrale de la feuille de polymère (4), que la feuille de polymère (4) est serrée, sur son bord, par un boîtier (6), que la première électrode (200) s'applique sur la face arrière de la feuille de polymère (4), que cette électrode (200) est réalisée sous la forme d'une tige de contact coudée et que la tige de contact s'applique élastiquement, sous l'effet de sa fixation au boîtier (6), contre la zone partielle activée (42) sur la face arrière de la feuille de polymère (4).

6. Sonde à ultrasons suivant l'une des revendications 1 à 5, caractérisée par le fait que la feuille de polymère (4) comporte au moins une ouverture (218) réalisant une compensation de pression.

7. Sonde à ultrasons suivant l'une des revendications 1 à 6, caractérisée par le fait qu'il est prévu deux chambres (100a, 100b), qui sont séparées l'une de l'autre par la feuille de polymère (4).

8. Sonde à ultrasons suivant la revendication 7, caractérisée par le fait que chaque chambre (100a, 100b) comporte une bague de serrage (6a, 6b).

9. Sonde à ultrasons suivant l'une des revendications 1 à 8, caractérisée par le fait que la seconde électrode (8) comporte une grille métallique (214) distante de la feuille de polymère (4).

10. Sonde à ultrasons suivant la revendication 9, caractérisé par le fait que la grille métallique (214) est reliée d'une manière électriquement conductrice à une bague métallique (216), qui enveloppe la zone partielle activée (42).